# EUROPÄISCHE PATENTSCHRIFT

(11) **EP 1 333 265 B1**
(45) Veröffentlichungstag und Bekanntmachung des Hinweises auf die Patenterteilung: **07.09.2005**
(21) Anmeldenummer: 03001448.4
(22) Anmeldetag: 22.01.2003
(51) Int. Cl.: G01M 1/02, G01M 1/06

(54) **Messen einer Unwucht eines Motorrad-Rades mit einer Lösung der Mitnehmereinrichtung durch eine kurzzeitige Drehzahlaenderung**
Measuring the unbalance of a motorcycle wheel with a loosening of the driver device by a sudden change of speed
Mesure du balourd dune roue de motocyclette avec un détachement du dispositif d'entraînement par un changement soudain de la vitesse de rotation

(30) Priorität: 25.01.2002 DE 10202897
(43) Veröffentlichungstag der Anmeldung: 06.08.2003
(73) Patentinhaber: Snap-on Equipment GmbH, 64319 Pfungstadt (DE)
(72) Erfinder: Rothamel, Karl, 64372 Ober-Ramstadt (DE); Drechsler, Josef, 64319 Pfungstadt (DE)
(74) Vertreter: Nöth, Heinz

(56) Entgegenhaltungen:
- EP-A- 0 353 434
- EP-A- 0 806 645
- DE-A- 3 923 191
- US-A- 4 489 608

## Beschreibung

Die Erfindung betrifft eine Vorrichtung zum Messen einer Unwucht eines Motorrad-Rades nach dem Oberbegriff des Patentanspruches 1 (Kraftfahrzeugrad Ansprüche 34-38) und ein Verfahren zum Messen einer Unwucht eines Motorrad-Rades nach dem Oberbegriff des Patentanspruches 39.

### [Stand der Technik]

Aus der DE 39 43 046 A1 sind eine derartige Vorrichtung und ein derartiges Verfahren bekannt, wobei zur drehfesten Verbindung zwischen einer Hauptwelle einer Radauswuchtmaschine und dem auszuwuchtenden Motorrad-Rad eine in Speichen des Motorrad-Rades eingreifende Mitnehmereinrichtung vorgesehen ist. Ferner ist aus dem Firmenprospekt der Hofmann Werkstatt-Technik GmbH, DE - 64311 Pfungstadt, mit der Bezeichnung "geodyna 1100/2100/2501" eine Mitnahmevorrichtung bekannt, welche Mitnehmer aufweist, die auf die Reifenlauffläche des Motorrad-Rades aufdrückbar sind.

Beim Unwuchtmesslauf, bei welchem das Motorrad-Rad durch ein von einem elektrischen Antrieb der Hauptwelle erzeugtes Drehmoment angetrieben wird, dreht das Motorrad-Rad in eigenen Lagern an einer mit der Mitnehmereinrichtung verbundenen Spannwelle.

Bei den bekannten Vorrichtungen besteht die Gefahr, dass das Messergebnis durch die beim Unwuchtmesslauf mitdrehende Mitnehmereinrichtung beeinflusst ist.

Die EP-A2,3-806 645 zeigt eine entsprechende Fliehkraftmitnahme.

### [Aufgabe der Erfindung]

Aufgabe der Erfindung ist es daher, mit geringem Aufwand, d.h. möglichst ohne großen zusätzlichen konstruktiven Aufwand einen von der Mitnehmereinrichtung unbeeinflussten Messlauf bei der eingangs genannten Vorrichtung und dem eingangs genannten Verfahren zu erreichen.

Diese Aufgabe wird durch die Ansprüche 1, 39 gelöst.

Bei der Erfindung ist die drehfeste Verbindung zwischen der Mitnehmereinrichtung und dem Motorrad-Rad durch eine auf die Mitnehmereinrichtung wirkende Trägheitskraft, welche durch einen über die Hauptwelle übertragenen Drehmomentimpuls gebildet wird, lösbar. Das Lösen der drehfesten Verbindung erfolgt vorzugsweise bei der Messdrehzahl. Das Motorrad-Rad kann dann frei auf der Spannwelle in seinen eigenen Lagern unbeeinflusst von der Mitnehmereinrichtung drehen und aus einer Radunwucht resultierende Kräfte werden von der Messeinrichtung der Auswuchtmaschine ohne Fremdeinflüsse erfasst.

Nach dem Messlauf kann das Motorrad-Rad durch eine herkömmliche Bremseinrichtung, welche auch eine zusätzliche an der Auswuchtmaschine vorgesehene Bremseinrichtung sein kann, abgebremst und gegebenenfalls in die Unwuchtausgleichsdrehwinkelposition gebracht werden.

Falls das Abbremsen durch den elektrischen Antrieb der Hauptwelle erfolgt, ist es von Vorteil, durch einen weiteren Drehmomentimpuls eine Trägheitskraft zu erzeugen, durch welche die Mitnehmereinrichtung wiederum drehfest mit dem Motorrad-Rad verbunden wird. Vorzugsweise wird die Hauptwelle, mit welcher die Mitnehmereinrichtung durch eine lösbare Verbindung drehfest verbunden ist, auf die Drehzahl gebracht, welche das Motorrad-Rad nach Durchführung des Messlaufes aufweist, wobei bei dieser Drehzahl der Drehmomentimpuls und die daraus resultierenden Trägheitskräfte erzeugt werden, welche die Mitnehmereinrichtung mit dem sich drehenden Rad verbindet.

Die Trägheitskraft kann durch eine mit der Hauptwelle mitdrehenden trägen Masse, auf welche der Drehmomentimpuls wirkt, erzeugt werden. Vorzugsweise ist die träge Masse gegenüber den Bauteilen, durch welche die drehfeste Verbindung zwischen der Hauptwelle und dem Motorrad-Rad aufrechterhalten wird, beweglich angeordnet, wobei die Bewegungsstrecke vorzugsweise begrenzt ist. Die durch den Drehmomentimpuls bewirkte Bewegung der trägen Masse erfolgt vorzugsweise gegen eine Rückstellkraft, insbesondere gegen die Kraft einer Rückstellfeder.

Bei einem bevorzugten Ausführungsbeispiel ist die träge Masse beweglich an der Mitnehmereinrichtung gelagert.

Vorzugsweise ist die träge Masse in einer der beiden Drehrichtungen der Hauptwelle beweglich gelagert. Der Drehmomentimpuls kann vom elektrischen Antrieb, welcher die Hauptwelle der Auswuchtmaschine antreibt, erzeugt werden. Der Drehmomentimpuls bedeutet eine kurzzeitige Änderung des vom elektrischen Antrieb erzeugten und auf die Hauptwelle der Auswuchtmaschine übertragenen Drehmoments. Es kann sich um eine kurzzeitige Drehmomenterhöhung oder um eine kurzzeitige Drehmomentverringerung handeln.

Die Mitnehmereinrichtung besitzt einen oder mehrere Mitnehmerbügel, welcher bzw. welche mit einer bestimmten Mitnehmerkraft auf die Reifenlauffläche des Motorrad-Rades aufdrückbar ist bzw. sind. Vorzugsweise kommt eine Mitnehmereinrichtung zum Einsatz, bei welcher ein einziger Mitnehmerbügel auf die Reifenlauffläche des Motorrad-Rades aufgedrückt wird. Der Mitnehmerbügel ist vorzugsweise um eine im wesentlichen parallel zur Achse der Hauptwelle der Auswuchtmaschine parallele Schwenkachse schwenkbar gelagert. Hierbei kann der Mitnehmerbügel vorzugsweise drei Positionen einnehmen, wobei eine erste Position beim Hochlauf auf Messdrehzahl eingenommen wird, bei welcher der Mitnehmerbügel zur drehfesten Verbindung auf die Reifenlauffläche des Motorrad-Rades mit einer bestimmten Mitnehmerkraft aufgedrückt wird. Die Mitnehmerkraft kann von Hand von der Serviceperson beim Aufsetzen des Mitnehmerbügels oder durch eine in radialer Richtung bezüglich der Hauptwellenachse wirkende Federkraft gebildet werden. In einer zweiten Position ist der Mitnehmerbügel in einer vom Motorrad-Rad gelösten Position gehalten. Diese zweite Position nimmt der Mitnehmerbügel dann ein, wenn aufgrund der vom Drehmomentimpuls erzeugten Trägheitskraft der Mitnehmerbügel aus der ersten Stellung gelöst wurde und in die zweite Stellung durch eine Verstellkraft, welche vorzugsweise von einer Mitnehmerfeder erzeugt wird, in die zweite Stellung gebracht ist. In der dritten Position ist der Mitnehmerbügel wiederum durch die Kraft der Mitnehmerfeder auf die Lauffläche des Motorrad-Rades aufgedrückt. Das Lösen des Mitnehmerbügels aus der vorzugsweise verrasteten zweiten Position erfolgt durch die vom zweiten Drehmomentimpuls erzeugten Trägheitskraft. Von der zweiten Position in die dritte Position wird der Mitnehmerbügel durch die Kraft der Mitnehmerfeder, welche den Mitnehmerbügel auf die Reifenlauffläche des Motorrad-Rades aufdrückt, bewegt.

Die Mitnehmerfeder, welche auch teilweise die Mitnehmerkraft erzeugen kann, bewirkt beim bevorzugten Ausführungsbeispiel die Verschwenkung des Mitnehmerbügels um seine Schwenkachse beim Wechsel zwischen den aufeinanderfolgenden drei Stellungen, wobei zumindest in der ersten und in der zweiten Position der Mitnehmerbügel durch eine Rasteinrichtung fixiert ist, deren Rastpositionen durch die vom Drehmomentimpuls bewirkte Trägheitskraft gelöst werden. Die Verschwenkung des Mitnehmerbügels kann jedoch auch durch einen zusätzlichen Kraftspeicher, z.B. eine Feder bewirkt werden.

Die Übertragung des vom elektrischen Antrieb erzeugten Drehmoments auf die Hauptwelle der Radauswuchtmaschine kann durch einen Riementrieb erfolgen. Es kann auch ein Zahnradgetriebe zum Einsatz kommen, über welches das vom elektrischen Antrieb erzeugte Drehmoment auf die Hauptwelle übertragen wird. Die Zahnräder des Zahnradgetriebes können eine Schrägverzahnung aufweisen. Durch einen ständig aufrechterhaltenen Kraftschluss über die Zahnräder werden kurzzeitige Drehzahländerungen zur Erzeugung des Drehmomentimpulses unverzögert auf die Hauptwelle und damit auf die drehfest mit der Hauptwelle verbundene träge Masse zur Betätigung der Mitnehmereinrichtung übertragen. Da bei Verwendung eines Asynchronmotors, insbesondere Einphasenasynchronmotors die Messdrehzahl unterhalb der Synchrondrehzahl liegt, wird über das Zahnradgetriebe auf die Hauptwelle ständig ein vorwärtstreibendes Drehmoment übertragen

Bei der Erfindung kommt ein als Wechselstrommotor, insbesondere Asynchronmotor ausgebildeter elektrischer Antrieb zum Einsatz. Dessen Stromversorgungsschaltung weist vorzugsweise einen durch Pulsbreitenmodulation gesteuerten Wechselspannungssteller auf. Der Wechselspannungssteller besitzt einen Längsschalter und einen Kommutierungs-schalter, welche von der Pulsbreitenmodulation gesteuert werden, wobei sowohl der Längsschalter als auch der Kommutierungsschalter von jeweils zwei antiseriell geschalteten Halbleiterschaltern gebildet werden. Hierdurch lassen sich kurzzeitige Drehmomentänderungen (Drehmomentimpulse) schaffen, welche die zur Betätigung der Mitnehmereinrichtung erforderlichen Trägheitskräfte erzeugen.

### [Beispiele]

Anhand der Figuren wird an Ausführungsbeispielen die Erfindung noch näher erläutert.

Es zeigt
- Fig. 1: eine Seitenansicht eines Ausführungsbeispiels;
- Fig. 2: eine Vorderansicht des in Fig. 1 dargestellten Ausführungsbeispiels mit teilweise geöffnetem Maschinengehäuse;
- Fig. 3: in vergrößerter Frontansicht einen Teil einer beim Ausführungsbeispiel zur Anwendung kommenden Mitnehmereinrichtung;
- Fig. 4: eine Seitenansicht des in der Fig. 3 dargestellten Teils der Mitnehmereinrichtung in einer ersten Position zur Übertragung eines Drehmoments im Hochlauf auf Messdrehzahl auf ein auszuwuchtenden Motorrad-Rad;
- Fig. 5: den Betriebszustand, bei welchem die drehfeste Verbindung zwischen dem Motorrad-Rad und der Mitnehmereinrichtung gelöst wird;
- Fig. 6: eine zweite Position, in welcher das in den Fig. 3 bis 5 dargestellte Teil der Mitnehmereinrichtung in verrastetem Zustand losgelöst vom Motorrad-Rad gehalten wird;
- Fig. 7: eine dritte Position des in den Fig. 3 bis 6 dargestellten Mitnehmerteils, in welcher die Mitnehmereinrichtung drehfest mit dem Motorrad-Rad beim Abbremsen nach dem Messlauf verbunden ist; und
- Fig. 8: einen elektrischen Antrieb für die Hauptwelle der Radauswuchtmaschine des Ausführungsbeispiels.

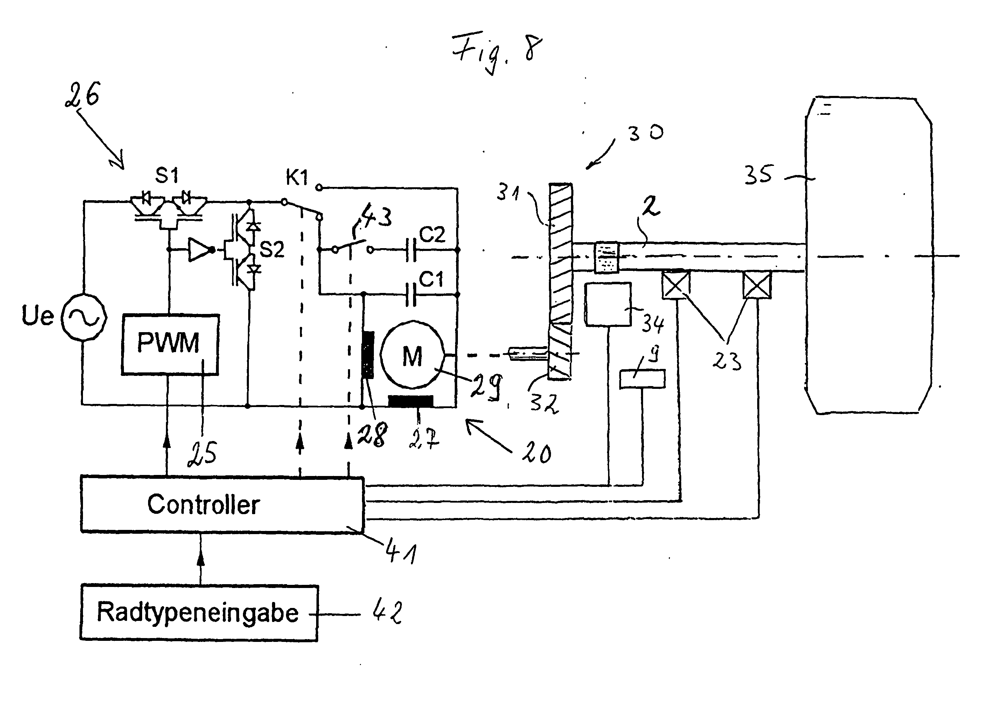

In den Figuren ist eine Radauswuchtmaschine gezeigt, mit welcher Fahrzeugräder jeglicher Art, insbesondere Kraftfahrzeugräder und Motorrad-Räder ausgewuchtet werden können. Die Radauswuchtmaschine besitzt eine Hauptwelle 2, welche in einer Lagereinrichtung 33 am Maschinengehäuse 1 gelagert ist. Die Lagereinrichtung 33 kann die Messanordnung sowie Messwandler, insbesondere Kraftmesswandler einer Messeinrichtung 23 (Fig. 8) beinhalten. Eine derartige Lagereinrichtung ist aus der DE 198 44 975 C2 bekannt.

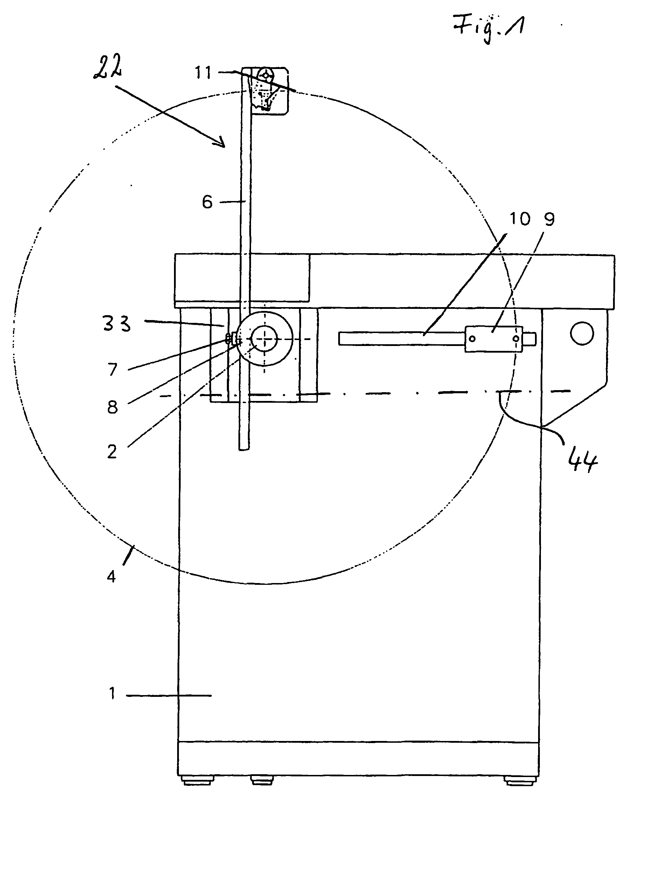

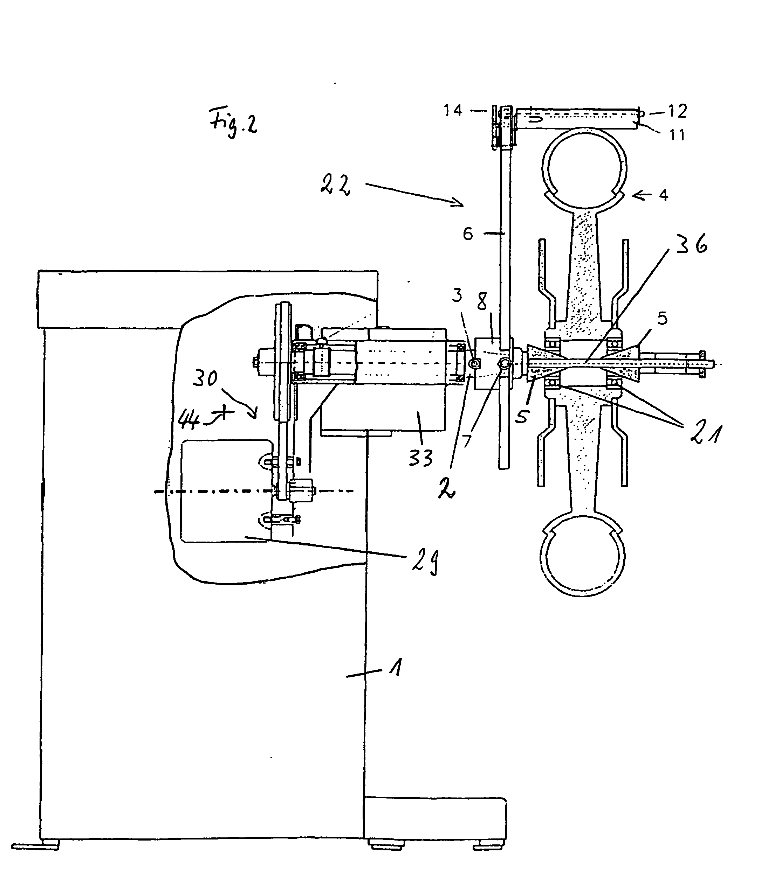

Die Hauptwelle 2 wird von einem elektrischen Antrieb 20, der einen Elektromotor 29 aufweist und im einzelnen anhand der Fig. 8 noch erläutert wird, angetrieben. Hierzu liefert der elektrische Antrieb 20 ein Drehmoment, welches über die Hauptwelle 2 auf das auszuwuchtende Kraftfahrzeugrad 35 (Fig. 8) oder das mit Hilfe einer Mitnehmereinrichtung 22 drehfest mit der Hauptwelle 2 verbundene Motorrad-Rad 4 (Fig. 1 und 2) übertragen wird.

Zur Unwuchtmessung des Motorrad-Rades 4 besitzt die Mitnehmereinrichtung 22 eine Spannwelle 19, welche koaxial zur Hauptwelle 2 angeordnet wird, und auf welcher das Motorrad-Rad 4 in seinen eigenen Lagern 21 drehbar gelagert ist (Fig. 1 und 2). Die Mitnehmereinrichtung 22 besitzt eine Befestigungshülse 8 (Futter), welches auf das vordere gegebenenfalls konisch ausgebildete Ende der Hauptwelle 2 aufgesetzt ist. Hierzu besitzt die Befestigungshülse 8 eine konisch geformte Bohrung. Mit Hilfe eines lösbaren Befestigungsmittels 3, insbesondere einer Mitnehmerschraube wird die Befestigungshülse 8 drehfest mit der Hauptwelle 2 verbunden. An der Befestigungshülse 8 ist ein in seiner Längsrichtung, d.h. radial zur Hauptwelle 2 verschiebbarer Mitnehmerarm 6 vorgesehen. In Abhängigkeit von dem Raddurchmesser kann die wirksame Länge des Mitnehmerarmes 6 eingestellt werden und ein am Mitnehmerarm 6 vorgesehener Mitnehmerbügel 11 mit einer bestimmten Mitnehmerkraft auf die Lauffläche des Rades 4 aufgedrückt werden. Durch eine Klemmeinrichtung 7, insbesondere Klemmschraube, wird der Mitnehmerarm, der sich im wesentlichen radial von der Befestigungshülse 8 erstreckt, mit der Befestigungshülse 8 fest verbunden.

Die Spannwelle 36 ist beim dargestellten Ausführungsbeispiele drehfest mit der Befestigungshülse 8 verbunden. Es ist jedoch auch möglich, die Spannwelle 36 durch eine Bohrung der Befestigungshülse 6 in eine entsprechende Ausnehmung am vorderen Ende der Spannwelle 2 beispielsweise durch Schraubverbindung drehfest einzusetzen. An der Spannwelle 36 sind konisch verlaufende Zentriervorrichtungen 5 vorgesehen, welche die Anordnung von Motorrad-Rädern 4 mit unterschiedlichen Narbendurchmessern bzw. unterschiedlichen Lagerdurchmessern der Radlager 21 zentriert auf der Spannwelle 36 gewährleisten.

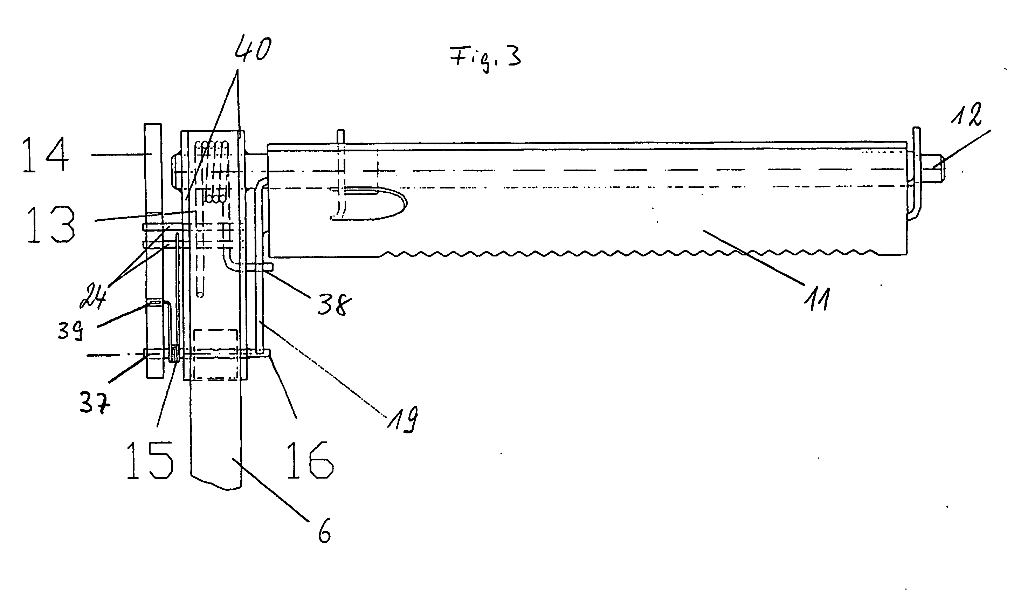

Am freien Ende des Mitnehmerarmes 6 besitzt die Mitnehmereinrichtung 22 den Mitnehmerbügel 11, welcher um eine sich im wesentlichen parallel zur Hauptwelle 2 und zur Spannwelle 36 erstreckende Schwenkachse 12 schwenkbar gelagert ist. Die Schwenkachse 12 für den Mitnehmerbügel 11 ist am freien Ende des Mitnehmerarmes 6 mit einer zwei parallele Lagerplatten aufweisenden Lagereinrichtung 40 befestigt, wie insbesondere aus Fig. 3 zu ersehen ist. Für eine drehfeste Verbindung der Mitnehmereinrichtung 22 mit dem Motorrad-Rad 4 wird, wie schon erläutert, der Mitnehmerbügel 11 auf die Lauffläche des Reifens des Motorrad-Rades 4 aufgesetzt, wie es aus den Fig. 1 und 2 zu ersehen ist. Dies wird durch entsprechende Einstellung der wirksamen Länge des Mitnehmerarmes 6 und dessen feste Verbindung mit der Befestigungshülse 8 durch Anziehen der Klemmeinrichtung 7 erreicht. In dieser in den Fig. 1 bis 4 dargestellten ersten Position wird das vom elektrischen Antrieb 20 erzeugte Drehmoment über die Hauptwelle 2 und die Mitnehmereinrichtung 22 auf das Motorrad-Rad 4 übertragen. Auf diese Weise kann für die Durchführung einer Unwuchtmessung das Motorrad-Rad 4 auf Messdrehzahl hochgefahren werden.

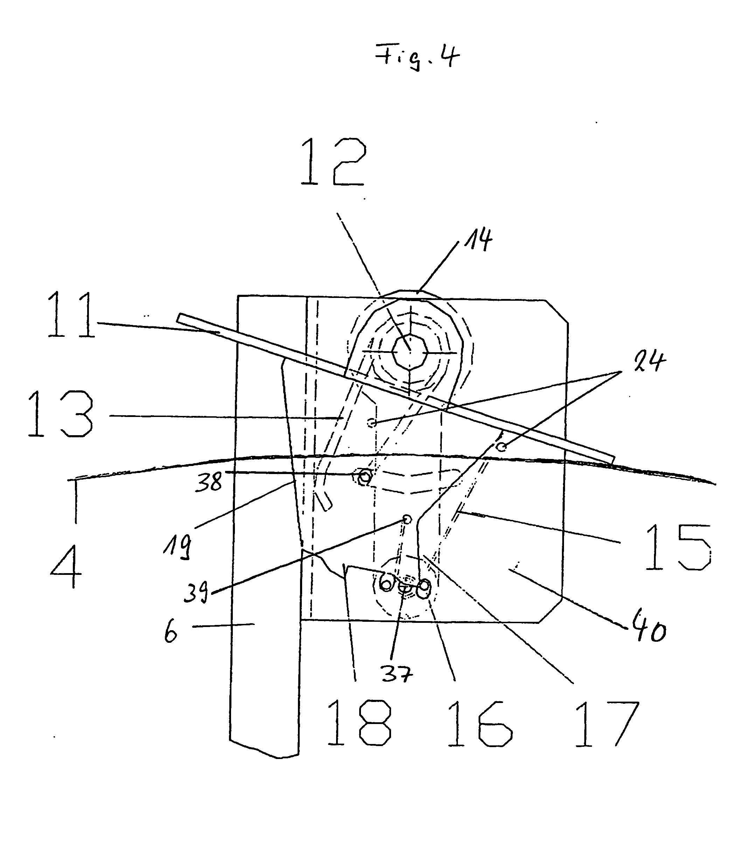

Um den Mitnehmerbügel 11, welcher beim dargestellten Ausführungsbeispiel als Mitnehmerleiste bzw. Mitnehmerplatte ausgebildet ist, in der ersten Position (Mitnahmeposition) zu halten, ist der Mitnehmerbügel 11 in der in der Fig. 4 dargestellten geschwenkten Position festgehalten. Hierzu ist eine Rasteinrichtung vorgesehen, welche eine mit dem Mitnehmerbügel 11 fest verbundene Anschlagplatte 19 und Rastelemente 16 beinhaltet. Die Anschlagplatte 19 besitzt zwei Rastanschläge 17 (erster Rastanschlag) und 18 (zweiter Rastanschlag). Bei der in der Fig. 1 dargestellten Position ist das Rastelement 16 im Eingriff mit dem ersten Rastanschlag 17 an der Anschlagplatte 19. Wie aus den Figuren zu ersehen ist, erstreckt sich die Anschlagplatte 19 im wesentlichen in einer zur Schwenkachse 12 senkrechten Ebene.

Die beiden Rastelemente 16, von denen das eine (in den Fig. 4 bis 7 das rechte Rastelement) mit den beiden Rastanschlägen 17 und 18 in Eingriff kommt, sind starr mit einer trägen Masse 14 verbunden, welche beim dargestellten Ausführungsbeispiel als Pendel ausgebildet ist und um eine Pendelachse 37 beweglich am Mitnehmerarm 6 bzw. der Lagereinrichtung 40 gelagert ist. Hierdurch ist gewährleistet, dass die träge Masse 14 zusammen mit der Hauptwelle 2 umläuft, wenn auf das Motorrad-Rad 4 vom elektrischen Antrieb 20 ein Drehmoment übertragen wird. Die träge Masse 14 kann auch an einer geeigneten anderen Stelle und durch andere geeignete Mittel drehfest mit der Hauptwelle 2 verbunden werden, so dass eine Betätigung der Rasteinrichtung möglich ist. Die träge Masse 14 des Pendels ist gegen eine Rückstellkraft, welche von einer Rückstellfeder 15 erzeugt wird, um die Pendelachse 37 beweglich gelagert. Bei Übertragung des vom elektrischen Antrieb 20 gelieferten Drehmoments zum Hochlauf auf Messdrehzahl wird die träge Masse 14 des Pendels gegen einen Anschlag 24 (linker Anschlag in den Fig. 4 bis 7) gedrückt. Dieser linke Anschlag 24 ist am freien Ende des Mitnehmerarmes 6 vorzugsweise an der die zwei parallele Lagerplatten aufweisenden Lagereinrichtung 40 befestigt. Die Rückstellfeder 15, welche als Schenkelfeder ausgebildet ist, stützt sich mit ihrem eigenen Federende (Federschenkel) an einem weiteren Begrenzungsanschlag 24, welcher an der Lagereinrichtung 40 befestigt ist, ab. Mit ihrem zweiten Federende (Federschenkel) greift die Rückstellfeder 15 in einer Angriffsstelle 39 am Pendel, welches die träge Masse 14 darstellt, an.

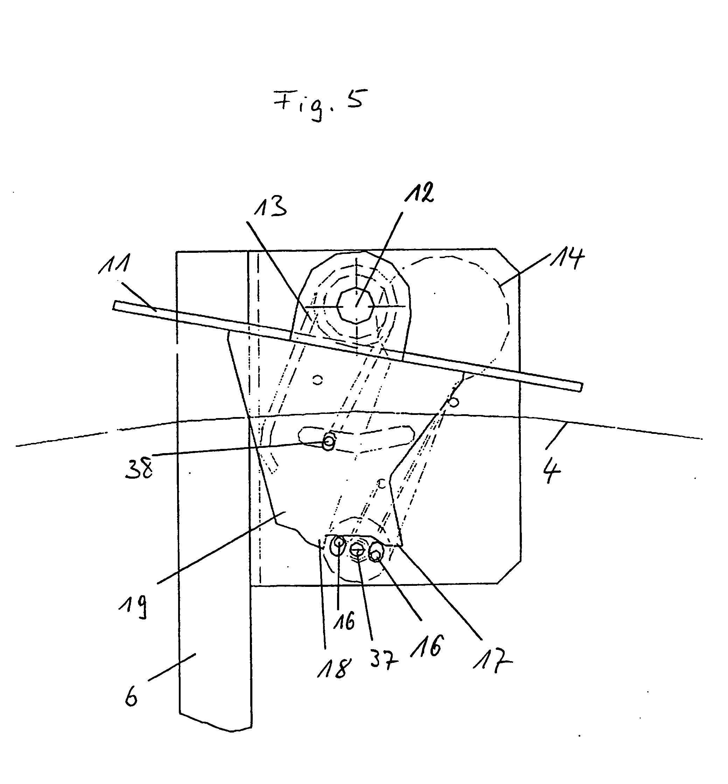

Wenn das auszuwuchtende Motorrad-Rad 4 beim Hochlauf die Messdrehzahl erreicht hat, wird vom elektrischen Antrieb vorzugsweise durch eine kurzzeitige Drehzahländerung insbesondere Drehzahlerhöhung ein Drehmomentimpuls erzeugt, durch welchen die träge Masse 14 des Pendels gegen die Rückstellkraft der Feder in der Fig. 4 vom linken Begrenzungsanschlag 24 im Uhrzeigersinn um die Pendelachse 37 in die in der Fig. 5 dargestellte Position geschwenkt wird. Diese Schwenkbewegung wird vorzugsweise durch den rechten Begrenzungsanschlag 24 begrenzt. Bei dieser Bewegung der trägen Masse 14 aus der Position der Fig. 4 in die Position in der Fig. 5 löst sich das rechte Rastelement 16 vom ersten Rastanschlag 17 durch Verschwenken um die Pendelachse 37.

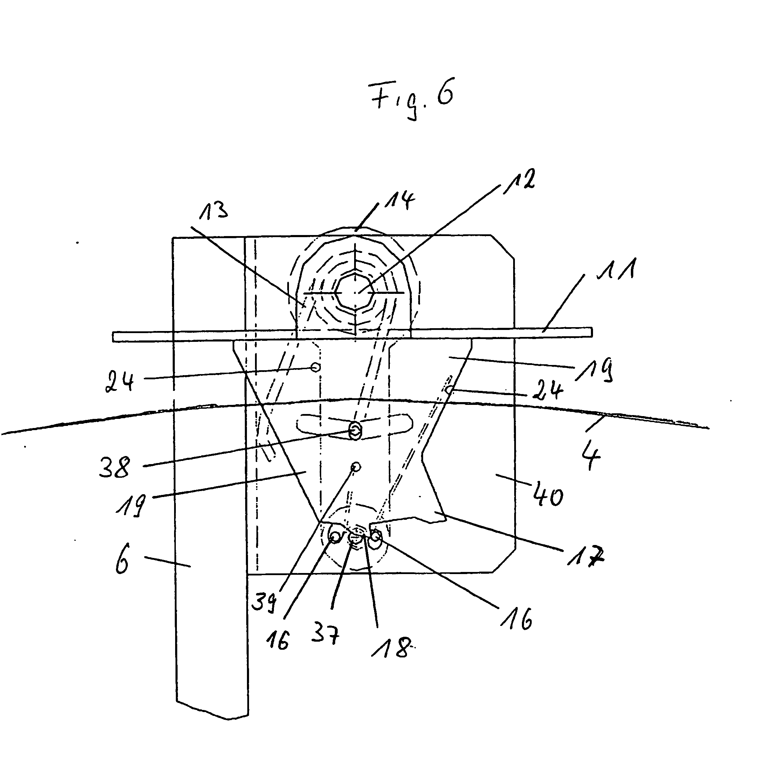

Dabei wird der Mitnehmerbügel 11 aufgrund einer Federkraft, welche durch eine Mitnehmerfeder 13 erzeugt wird, entgegen dem Uhrzeigersinn aus der in der Fig. 4 dargestellten ersten Position um die Schwenkachse 12 geschwenkt und von der Lauffläche des Motorrad-Rades 4 gelöst, wie es in Fig. 5 dargestellt ist. Die Mitnehmerfeder 13 ist beim dargestellten Ausführungsbeispiel ebenfalls als Schenkelfeder ausgebildet. Das eine Federende (linker Federschenkel) stützt sich am Mitnehmerarm 6 ab. Das rechte Federende (rechter Federschenkel) greift in einer Angriffsstelle 38, welche an der Anschlagplatte 19 vorgesehen ist, am Mitnehmerbügel 11 an. Da die Rückstellfeder 15 in der in der Fig. 4 dargestellten ersten Position vorgespannt ist und somit einen Kraftspeicher bildet, wird beim Lösen des Rasteingriffs zwischen dem Rastelement 16 und dem Rastarmanschlag 17 diese Vorspannkraft freigesetzt, so dass, wie schon erläutert, der Mitnehmerbügel 11 entgegen dem Uhrzeigersinn in die in der Fig. 5 dargestellte Zwischenposition, bei welcher der Mitnehmerbügel 11 vom Motorrad-Rad 4 gelöst ist, verschwenkt wird. Diese Schwenkbewegung setzt sich fort bis das rechte Rastelement 16 an dem zweiten Rastanschlag 18 (Fig. 6) anschlägt.

Dabei wird das rechte Rastelement 16 in seine obere Position gebracht, welche im Schwenkbereich des zweiten Rastanschlages 18 liegt. Dies wird dadurch erreicht, dass die träge Masse 14 des Pendels um die Pendelachse 37 entgegen dem Uhrzeigersinn wieder in ihre Ausgangslage aufgrund der Rückstellkraft der Rückstellfeder 15 zurückgebracht wird. Unterstützt wird dieses Zurückbringen der trägen Masse in die Ausgangsposition dadurch, dass beim Verschwenken des Mitnehmerbügels 11 entgegen dem Uhrzeigersinn auf das in der Fig. 5 linke Rastelement 16, welches am Pendel der trägen Masse 14 vorgesehen ist, über eine Anschlagkante an der Anschlagplatte 19 ein Impuls ausgeübt wird, welcher das Pendel entgegen dem Uhrzeigersinn in die Ausgangsposition zurückverschwenkt (Fig. 6). Dabei liegt das Pendel der trägen Masse 14 wieder am linken Begrenzungsanschlag 24 an.

In der verrasteten zweiten Position, welche in der Fig. 6 dargestellt ist, wird der Mitnehmerbügel 11 zumindest während des Messlaufs, bei welchem die Unwuchtmessung am Motorrad-Rad 4 durchgeführt wird, in dem vom Motorrad-Rad 4 gelösten Zustand gehalten. Dabei dreht das Motorrad-Rad 4 frei und ohne Fremdeinflüsse in seinen Lagern 21 an der Spannwelle 36. Die Drehbewegung der Hauptwelle 2 wird während des Messlaufs angehalten. Aufgrund seiner Schwerkraft bewegt sich der Mitnehmerbügel 4 in die 6-Uhr-Position und bleibt, solange der Messlauf durchgeführt wird, losgelöst von der Lauffläche des Motorrad-Rades, wie es in der Fig. 6 dargestellt ist.

Bei diesem Messlauf wird die Drehbewegung des Motorrad-Rades 4 von einer Abtasteinrichtung 9, welche an der Außenseite des Maschinengehäuses 1 angeordnet ist, erfasst (Fig. 1). Hierbei kann beispielsweise eine Markierung, welche am Motorrad-Rad angebracht ist, optisch von der Abtasteinrichtung 9 abgetastet werden. Es können auch mehrere Markierungen oder Teile des Motorrad-Rades abgetastet werden. Die Abtasteinrichtung 9 kann in einer Schiene 10 auf den Umlaufradius der Markierung bzw. abgetasteten Stellen eingestellt werden. Mit Hilfe von Messwandlern einer Messeinrichtung 23, welche, wie schon erläutert, in der Lagereinrichtung 33 für die Hauptwelle 2 integriert sein können, werden aus der Radunwucht resultierende Kräfte gemessen und durch die Signale der Abtasteinrichtung 9 winkelbezogen einer Maschinenelektronik 41 zugeleitet. Die Maschinenelektronik 41 beinhaltet einen Rechner, welcher aus den empfangenen Signalen Unwuchtausgleichsgrößen in bekannter Weise berechnet (Fig. 8). Bei der in Fig. 8 dargestellten Anordnung der Messeinrichtung 23 sind die Messwandler im axialen Abstand voneinander an der Hauptwelle 2 angeordnet. Es ist jedoch auch möglich, eine Messanordnung zu verwenden, wie sie aus der DE 198 44 975 C2 bekannt ist.

Nach Durchführung des Messlaufs kann das Motorrad-Rad 4 durch eine geeignete nicht näher dargestellte Bremseinrichtung zum Stillstand gebracht werden und in die Unwuchtausgleichsdrehwinkelposition gebracht werden.

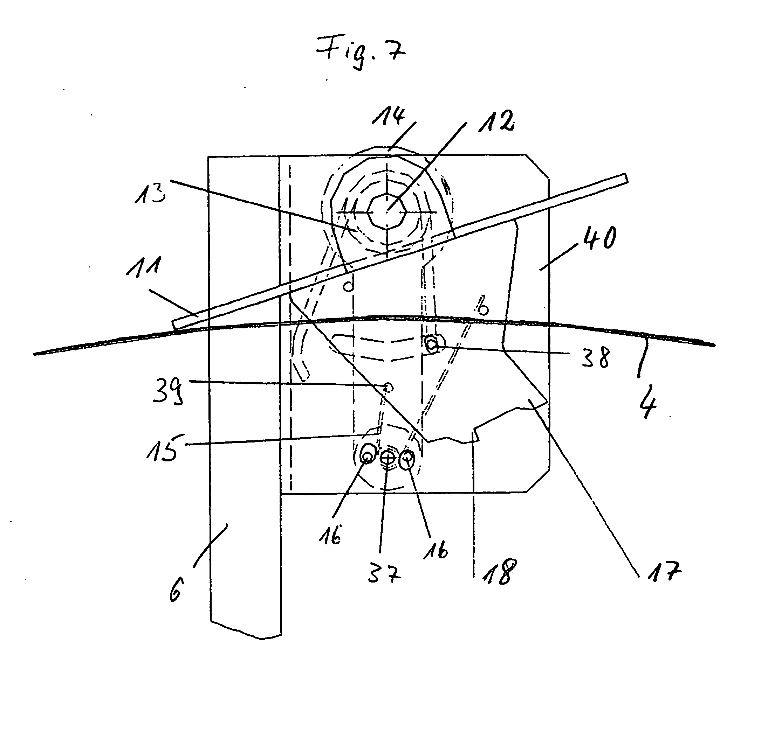

Vorzugsweise wird beim dargestellten Ausführungsbeispiel nach dem Unwuchtmesslauf das Motorrad-Rad 4 durch die elektrische Antriebseinrichtung 20 abgebremst. Hierzu wird die elektrische Antriebseinrichtung 20 wieder eingeschaltet und die Hauptwelle 2 und die drehfest damit verbundene Mitnehmereinrichtung 22 auf die Drehzahl gebracht, welche das auslaufende Motorrad-Rad 4 momentan aufweist. Die entsprechende Drehzahl kann mit Hilfe der Abtasteinrichtung 9 und entsprechende Auswertung der Abtastsignale in der Maschinenelektronik 41 ermittelt werden. Sobald die Hauptwelle 2 und die mitdrehende Mitnehmereinrichtung 22 die momentane Drehzahl des Motorrad-Rades 4 erreicht haben, erzeugt der elektrische Antrieb 20 gesteuert durch die Maschinenelektronik 41 eine kurzzeitige Drehmomentänderung und somit weiteren Drehmomentimpuls, durch welchen die träge Masse 14 um die Pendelachse 37 aus ihrer in der Fig. 6 dargestellten linken Ausgangsposition im Uhrzeigersinn geschwenkt wird. Die Schwenkbewegung kann bis zum rechten Begrenzungsanschlag 24 erfolgen, wie es in Fig. 5 dargestellt ist. Hierbei wird das rechte Rastelement 16 außer Eingriff mit dem zweiten Rastanschlag 18 gebracht, so dass der Mitnehmerbügel 11 aus der in der Fig. 6 dargestellten Position entgegen dem Uhrzeigersinn in die in der Fig. 7 dargestellte Position um die Schwenkachse 12 geschwenkt wird. Diese Schwenkbewegung wird durch die Kraft der Mitnehmerfeder 13 bewirkt. In der in der Fig. 7 dargestellten Position wird die andere Längskante des Mitnehmerbügels 11 auf die Lauffläche des Motorrad-Rades 4 aufgedrückt. Hierdurch wird eine drehfeste Verbindung zwischen dem Motorrad-Rad 4 und der Hauptwelle 2 über die Mitnehmereinrichtung 22 hergestellt. Vom elektrischen Antrieb wird ein die Drehzahl des Motorrad-Rades verringerndes Drehmoment (Bremsmoment) erzeugt, so dass das Motorrad-Rad angehalten wird. Vorzugsweise wird das Motorrad-Rad in der Ausgleichsposition, in welcher bequem der erforderliche Unwuchtausgleich vorgenommen werden kann, angehalten.
Die Mitnehmerkraft ist so bemessen, dass das vom elektrischen Antrieb 20 erzeugte Antriebs- und Bremsmoment schlupffrei auf das Motorrad-Rad 4 übertragen wird. Hierdurch wird gewährleistet, dass das Rad in der gewünschten Ausgleichswinkelposition für den Unwuchtausgleich angehalten wird.

In der Fig. 8 ist ein geeigneter elektrischer Antrieb 20 mit geeigneter Stromversorgungsschaltung 26 dargestellt. Mit diesem elektrischen Antrieb und der dazugehörigen Stromversorgungsschaltung 26 kann nicht nur das für den Hochlauf auf Messdrehzahl erforderliche Drehmoment und das zum Abbremsen erforderliche Drehmoment erzeugt werden, sondern es können auch die zum Bewegen des Mitnehmerbügels 11 in die entsprechenden Positionen erforderlichen Drehmomentimpulse erzeugt werden.

Zur gesteuerten Stromversorgung besitzt die Stromversorgungsschaltung 26 einen von einer Pulsbreitenmodulation (PWM) 25 gesteuerten Wechselspannungssteller mit einem Längsschalter S1 und einem Kommutierungsschalter S2, über welche Statorwicklungen 27, 28 eines den wesentlichen Teil des elektrischen Antriebs 20 bildenden Elektromotors 29 mit Strom versorgt werden. Mit Hilfe eines vorzugsweise als Relais ausgebildeten Umschalters K1 wird die Drehrichtung des Elektromotors 29 eingestellt. Bei der in der Figur dargestellten Schaltposition des Umschalters K1 ist beispielsweise die Vorwärtsdrehrichtung, in welcher das Kraftfahrzeugrad 35 oder das Motorrad-Rad 4 auf Messdrehzahl gebracht wird, dargestellt. Durch eine Kapazität im Hilfsstrang, welche in der Fig. 8 mit der Statorwicklung 27 in Reihe geschaltet ist, wird erreicht, dass die beiden Statorwicklungen 27, 28 mit einem Phasenunterschied von insbesondere 90° mit dem Motorstrom versorgt werden. Der Motorstrom wird von einer Wechselspannungsquelle Ue geliefert. Anstelle eines Kondensators können zur Änderung der Kapazität zwei oder mehr Kondensatoren C1, C2 im Hilfsstrang verwendet werden, welche in Abhängigkeit von der gewünschten Drehzahl in den Motorstromkreis geschaltet oder von diesem getrennt werden, wie es beispielsweise in der DE 100 00 235 A1 beschrieben ist. Beim dargestellten Ausführungsbeispiel kann der Kondensator mittels eines Schalters 43 zu- oder abgeschaltet werden. Bei geschlossenem Schalter sind die beiden Kondensatoren C1 und C2 wie bei einem Doppelkondensatormotor parallel geschaltet.

Der Schalter 43 wird von der Maschinenelektronik 41 gesteuert.

Sowohl der Längsschalter S1 als auch der Kommutierungsschalter S2 bestehen aus zwei anti-seriell geschalteten Halbleiterschaltern. Diese Halbleiterschalter sind vorzugsweise als IGBTs ausgebildet. Es können jedoch auch MOSFETs verwendet werden. Die Leistungshalbleiterschalter besitzen eine integrierte antiparallele Diode, so dass bei negativer Polarität über dem jeweiligen Halbleiterschalter diese Diode Strom führt und keine elektrische Spannung entstehen kann. Da die Halbleiterschalter Wechselspannung sperren oder Wechselstrom beim Betrieb des Wechselspannungsstellers führen müssen und die Halbleiterschalter aber nur Spannung einer Polarität sperren oder durchschalten, sind jeweils zwei Halbleiterschalter in anti-serieller Schaltung sowohl für den Längsschalter S1 als auch für den Kommutierungsschalter S2 vorgesehen.

Bei der in der Fig. 8 dargestellten Schaltstellung des Umschalters K1 wird vom Längsschalter S1 die Wechselspannung der Wechselspannungsquelle Ue, beispielsweise die Netzspannung zum Elektromotor 1 weitergegeben. Der Kommutierungsschalter S2 wird von der Pulsbreitenmodulation (PWM) 25 so angesteuert, dass er den Strom der Motorinduktivität solange übernimmt, wie der Längsschalter S1 abgeschaltet ist (synchrone Kommutierung). Hierzu werden die beiden Gates der den Längsschalter S1 bildenden Halbleiterschalter, z.B. die beiden IGBTs im Gegentakt zu den beiden Gates der den Kommutierungsschalter S2 bildenden Halbleiterschalter angesteuert. Hierbei ist sichergestellt, dass die von der Pulsbreitenmodulation 25 an die Gates des Längsschalters S1 und des Kommutierungsschalters S2 gelegten Steuerspannungen nicht gleichzeitig, sondern im Wechseltakt bzw. Gegentakt geliefert werden. Durch das Tastverhältnis des PWM-Signales wird die Stärke des den Statorwicklungen 27, 28 zugeführten Motorstroms bestimmt. Die Taktfrequenz des PWM-Signals wird vorzugsweise in der Größenordnung zwischen 3 bis 10 kHz moduliert.

Um das Rad 4 bzw. 35 nach dem Messlauf in einer bestimmten Position, beispielsweise Ausgleichs-Drehwinkelposition anzuhalten, wird durch den Elektromotor 29 ein Gegendrehmoment erzeugt. Hierzu wird der Umschalter K1 in Abhängigkeit von der jeweiligen Drehrichtung des Kraftfahrzeugrades 4 bzw. 35 in eine entsprechende Schalterstellung, z.B. die oben liegende Schalterstellung in der Fig. 8 gebracht. In dieser Schaltposition sind die Kondensatoren C1 und C2 bei geschlossenem Schalter 43 mit der Statorwicklung 28 in Reihe geschaltet. Der Schalter S2 wirkt bei diesem Motorbremsbetrieb als Längsschalter und der Schalter S1 als Kommutierungsschalter. Wie beim Hochlauf werden die Statorwicklungen 27, 28 über den Wechselspannungssteller mit Wechselstrom versorgt. Dabei wird ein Gegendrehmoment erzeugt, mit welchem die Drehung des Kraftfahrzeugrades 4 bzw. 35 und der Hauptwelle 2 abgebremst wird. Die Abbremsung kann gesteuert durch den Betrieb der Pulsbreitenmodulation 25 in der Weise erfolgen, dass das Kraftfahrzeugrad 4 bzw. 35 in der gewünschten Ausgleichs-Drehwinkelposition angehalten wird. Ferner ist es möglich, den Zeitpunkt des Umschaltens des Schalters K1 in den Motorbremsbetrieb so zu legen, dass bei bekannter Bremswirkung, welche durch das vom Elektromotor 1 erzeugte Drehmoment bewirkt wird, und in Abhängigkeit von der momentanen Drehzahl der Rotor in der Ausgleichs-Drehwinkelposition angehalten wird.

Zur Steuerung des Umschalters K1 und der Pulsbreitenmodulation 25 ist die Maschinenelektronik 41 vorgesehen, welche je nach Art des auszuwuchtenden Radtyps mit der Abtasteinrichtung 9 oder eine die Drehung der Hauptwelle 2 abtastenden Abtasteinrichtung 34 verbunden ist, durch die die jeweilige Drehwinkelposition der Hauptwelle 2 und damit des Kraftfahrzeugrades und/oder die Drehzahl sowie die Drehrichtung abgetastet werden.

Beim Auswuchten des Motorrad-Rades 4 kann das Drehmoment, welches vom elektrischen Antrieb 20 beim Hochlauf auf die Messdrehzahl geliefert wird, und das Drehmoment, welches nach dem Messlauf beim Abbremsen der Hauptwelle 2 zum Einsatz kommen, so weit reduziert werden, dass eine verringerte Mitnehmerkraft für die drehfeste Verbindung des Motorrad-Rades 4 mit der Hauptwelle 2 zum Einsatz kommen kann. Diese Mitnehmerkraft kann so weit reduziert werden, dass eine die Unwuchtmessung verfälschende Verlagerung des Mittelpunktes des Motorrad-Rades 4 gegenüber der Achse der Hauptwelle 2 beim Hochlauf und beim Abbremsen vermieden wird.

Beim dargestellten Ausführungsbeispiel ist eine Eingabeeinrichtung 42 für den jeweiligen Radtyp, welcher auf der Hauptwelle 2 aufgespannt ist, vorgesehen. In Abhängigkeit davon wird das Antriebssystem, insbesondere die Stromversorgungsschaltung 26 für den Elektromotor 29 zur Erzeugung des entsprechenden Versorgungsstroms und damit des Drehmoments gesteuert. Gemäß dem dargestellten Ausführungsbeispiel wird durch die Maschinenelektronik 41, an welche die Radtypeneingabeinformation weitergegeben wird, eine Pulsbreitenmodulation 25 für einen Wechselspannungssteller (S1, S2) eingestellt. Ferner kann zusätzlich oder allein der Kondensator C2 durch Öffnen des von der Maschinenelektronik 41 angesteuerten Schalters 43 beim Hochlauf und/oder beim Abbremsen geöffnet werden. Falls mehrere Kondensatoren vorgesehen sind, können ein oder mehrere dieser Kondensatoren abgetrennt werden. Hierdurch erreicht man in Abhängigkeit von dem an der Hauptwelle 2 vorhandenen Radtyp die entsprechende Einstellung des Drehmoments. In vorteilhafter Weise wird nicht nur der Hochlauf des Motorrad-Rades 4 auf die Messdrehzahl durch die in der Figur dargestellte Antriebsvorrichtung bewirkt, sondern auch das Abbremsen nach dem Messlauf. Hierzu wird, wie schon erläutert, der Umschalter K1 in die entsprechende Position gebracht.

Eine Reduzierung bzw. Beeinflussung des Drehmoments beim Hochlauf auf die Messdrehzahl und beim Abbremsen nach dem Messlauf kann auch mit Hilfe der in der DE 100 00 235 A1 beschriebenen Vorrichtung durchgeführt werden, wobei die Steuereinrichtung, mit welcher die Drehmomenteinstellung durchgeführt wird, in Abhängigkeit von der Radtypeneingabe beim Hochlauf und beim Abbremsen entsprechend betätigt wird.

Als Getriebe 30, mit welchem das vom elektrischen Antrieb erzeugte Drehmoment auf die Hauptwelle übertragen wird, kann ein Riementrieb, wie er in Figur 2 gezeigt ist, verwendet werden. Die auf der Welle des Elektromotors 29 sitzende Riemenscheibe besitzt einen geringeren Durchmesser als die auf der Hauptwelle 2 sitzende Riemenscheibe. Anstelle des Riementriebs kann ein Zahnradgetriebe bestehend aus zwei Zahnrädern 31 und 32 (Figur 8) verwendet werden. Vorzugsweise besitzen die beiden Zahnräder eine Schrägverzahnung. Da der Elektromotor 29 als Asynchronmotor insbesondere Einphasenasynchronmotor mit Hilfswicklung ausgebildet ist gibt der Motor ständig ein vorwärtstreibendes Drehmoment über die Zahnradübersetzung auf die Hauptwelle 2 ab.

Bei beiden Ausführungsbeispielen befindet sich der Elektromotor 29 unterhalb der Ebene, in welcher die Hauptwelle 2 angeordnet ist. Vorzugsweise ist die Lagereinrichtung 33 der Hauptwelle, in welcher auch die Messwandler der Messeinrichtung 23 vorzugsweise in der in der deutschen Patentschrift 198 44 975 C2 beschriebenen Anordnung integriert sind, als einheitliche Baueinheit gemeinsam mit dem Elektromotor 29 am Maschinengehäuse 1 um eine Schwenkachse 44 schwenkbar gelagert. Hierbei kann die Hauptwelle 2 aus der in den Figuren 1 und 2 dargestellten horizontalen Position in eine vertikale Position gebracht werden.

## Patentansprüche

1. Vorrichtung zum Messen einer Unwucht eines Motorrad-Rades mit
- einer drehbar gelagerten Hauptwelle (2) einer Radauswuchtmaschine, die von einem elektrischen Antrieb (20) antreibbar ist,
- einer Spannwelle (36), welche koaxial zur Hauptwelle (2) an der Auswuchtmaschine befestigbar ist und auf welcher das Motorrad-Rad (4) in seinen eigenen Lagern (21) drehbar gelagert ist,
- einer Mitnehmereinrichtung (22), über welche zum Übertragen eines vom elektrischen Antrieb (20) erzeugten Drehmoments von der Hauptwelle (2) auf das an der Spannwelle (36) drehbar gelagerte Motorrad-Rad (4) mit der Hauptwelle (2) drehfest verbunden ist, und
- einer Messeinrichtung (23), welche bei Messdrehzahl aus einer Unwucht des Motorrad-Rades resultierende Kräfte in einem Messlauf misst,
**dadurch gekennzeichnet, dass**
- die drehfeste Verbindung zwischen der Mitnehmereinrichtung (22) und dem Motorrad-Rad (4) durch eine auf die Mitnehmereinrichtung (22) wirkende Trägheitskraft, welche durch einen über die Hauptwelle (2) übertragenen Drehmomentimpuls gebildet ist, lösbar ist.

2. Vorrichtung nach Anspruch 1,
**dadurch gekennzeichnet, dass** der Drehmomentimpuls bei Messdrehzahl erzeugt ist.

3. Vorrichtung nach Anspruch 1 oder 2,
**dadurch gekennzeichnet, dass** nach dem Messlauf die Mitnehmereinrichtung (22) zur drehfesten Verbindung mit dem Motorrad-Rad (4) durch von einem weiteren Drehmomentimpuls erzeugte Trägheitskraft zum Abbremsen des Motorrad-Rades betätigt ist.

4. Vorrichtung nach einem der Ansprüche 1 bis 3,
**dadurch gekennzeichnet, dass** eine mit der Hauptwelle (2) mitgedrehte insbesondere an der Mitnehmereinrichtung (22) beweglich gelagerte träge Masse (14) vorgesehen ist, auf welche der Drehmomentimpuls wirkt.

5. Vorrichtung nach Anspruch 4,
**dadurch gekennzeichnet, dass** die träge Masse (14) in einer Richtung beweglich gelagert ist.

6. Vorrichtung nach Anspruch 4 oder 5,
**dadurch gekennzeichnet, dass** die träge Masse (14) gegen eine Rückstellkraft beweglich gelagert ist.

7. Vorrichtung nach einem der Ansprüche 4 bis 6,
**dadurch gekennzeichnet, dass** die träge Masse (14) in einer der beiden Drehrichtungen der Hauptwelle (2) beweglich gelagert ist.

8. Vorrichtung nach einem der Ansprüche 4 bis 7,
**dadurch gekennzeichnet, dass** die träge Masse (14) als Pendel ausgebildet ist.

9. Vorrichtung nach einem der Ansprüche 1 bis 8,
**dadurch gekennzeichnet, dass** der Drehmomentimpuls durch den elektrischen Antrieb (20) erzeugt ist.

10. Vorrichtung nach einem der Ansprüche 1 bis 9,
**dadurch gekennzeichnet, dass** zur Erzielung der drehfesten Verbindung zwischen der Hauptwelle (2) und dem Motorrad-Rad (4) die Mitnehmereinrichtung (22) mit einer bestimmten Mitnehmerkraft am Motorrad-Rad (4) angreift.

11. Vorrichtung nach Anspruch 10,
**dadurch gekennzeichnet, dass** die Übertragung der Mitnehmerkraft durch eine Mitnehmerfeder (13) sichergestellt ist.

12. Vorrichtung nach Anspruch 10 oder 11,
**dadurch gekennzeichnet, dass** das vom elektrischen Antrieb (20) erzeugte Drehmoment in Abhängigkeit von der Mitnehmerkraft beim Hochdrehen auf Messdrehzahl und/oder beim Abbremsen einstellbar ist.

13. Vorrichtung nach einem der Ansprüche 1 bis 12,
**dadurch gekennzeichnet, dass** die Mitnehmereinrichtung (22) einen auf die Reifenlauffläche des Motorrad-Rades (4) mit der Mitnehmerkraft aufdrückbaren Mitnehmerbügel (11) aufweist.

14. Vorrichtung nach Anspruch 13,
**dadurch gekennzeichnet, dass** der Mitnehmerbügel (11) um eine zur Hauptwelle (2) im wesentlichen parallel verlaufende Schwenkachse (12) schwenkbar ist.

15. Vorrichtung nach Anspruch 13 oder 14,
**dadurch gekennzeichnet, dass** der Mitnehmerbügel (11) in drei Stellungen schwenkbar ist, wobei eine erste Stellung beim Hochlauf auf Messdrehzahl, eine zweite Stellung beim Lösen der drehfesten Verbindung zwischen Mitnehmereinrichtung (22) und Motorrad-Rad (4) und eine dritte Stellung beim Abbremsen des Motorrad-Rades (4) eingenommen werden.

16. Vorrichtung nach Anspruch 14 oder 15,
**dadurch gekennzeichnet, dass** beim Wechsel zwischen den aufeinanderfolgenden drei Stellungen der Mitnehmerbügel (11) um die Schwenkachse (12) in einer Richtung verschwenkt ist.

17. Vorrichtung nach einem der Ansprüche 1 bis 16,
**dadurch gekennzeichnet, dass** der Mitnehmerbügel (11) zumindest in der ersten und in der zweiten Stellung durch eine von der trägen Masse (14) betätigte Rasteinrichtung (16 bis 18) fixiert ist.

18. Vorrichtung nach Anspruch 17,
**dadurch gekennzeichnet, dass** die Rasteinrichtung (16 bis 18) von wenigstens einem durch die träge Masse (14) betätigten Rastelement (16) und am Mitnehmerbügel befestigten Rastanschlägen (17, 18), mit denen das wenigstens eine Rastelement (16) in Eingriff kommt, gebildet ist.

19. Vorrichtung nach einem der Ansprüche 4 bis 18,
**dadurch gekennzeichnet, dass** die Bewegungsstrecke der trägen Masse (16) begrenzt ist.

20. Vorrichtung nach Anspruch 19,
**dadurch gekennzeichnet, dass** zur Begrenzung der Bewegungsstrecke der trägen Masse (14) an der Mitnehmereinrichtung (22)wenigstens ein Anschlag (24) vorgesehen ist.

21. Vorrichtung nach einem der Ansprüche 13 bis 18,
**dadurch gekennzeichnet, dass** der Mitnehmerbügel (11) durch Federkraft, insbesondere die Mitnehmerfeder (13) aufeinanderfolgend von der ersten Stellung bis in die dritte Stellung bewegbar ist.

22. Vorrichtung nach einem der Ansprüche 1 bis 21,
**dadurch gekennzeichnet, dass** die Mitnehmereinrichtung (22) und die Spannwelle (19) drehfest miteinander verbunden sind.

23. Vorrichtung nach einem der Ansprüche 1 bis 22,
**dadurch gekennzeichnet, dass** die drehfeste Verbindung der Mitnehmereinrichtung (22) mit der Hauptwelle (2) lösbar ist.

24. Vorrichtung nach einem der Ansprüche 1 bis 23,
**dadurch gekennzeichnet, dass** bei der gelösten Drehverbindung zwischen der Mitnehmereinrichtung (22) und dem Motorrad-Rad (4) der elektrische Antrieb (20) der Hauptwelle (2) abgeschaltet ist.

25. Vorrichtung nach einem der Ansprüche 1 bis 24,
**dadurch gekennzeichnet, dass** am Maschinengehäuse (1) der Auswuchtmaschine eine die Drehbewegung des Motorrad-Rades (4) abtastende Abtasteinrichtung (9) angeordnet ist.

26. Vorrichtung nach Anspruch 25,
**dadurch gekennzeichnet, dass** die Abtasteinrichtung (9) eine am Motorrad-Rad (4) angeordnete Markierung abtastet.

27. Vorrichtung nach einem der Ansprüche 1 bis 26,
**dadurch gekennzeichnet, dass** die Stromversorgungsschaltung (26) zur Versorgung des als Wechselstrommotor, insbesondere Einphasen-Wechselstrommotor ausgebildeten elektrischen Antriebs (20) einen durch Pulsbreitenmodulation (25) gesteuerten Wechselspannungssteller (S1, S2) aufweist.

28. Vorrichtung nach Anspruch 27,
**dadurch gekennzeichnet, dass** der Wechselspannungssteller (A1, S2) einen Längsschalter (S1) und einen Kommutierungsschalter (S2), welche von der Pulsbreitenmodulation gesteuert sind, aufweist.

29. Vorrichtung nach Anspruch 27,
**dadurch gekennzeichnet, dass** der Längsschalter (S1) und der Kommutierungsschalter (S2) von jeweils zwei antiseriell geschalteten Halbleiterschaltern gebildet sind.

30. Vorrichtung nach einem der Ansprüche 27 bis 29,
**dadurch gekennzeichnet, dass** der als Einphasen-Wechselstrommotor ausgebildete Elektromotor (29) zwei Statorwicklungen (27, 28) und wenigstens einen je nach Drehrichtung mit einer der beiden Statorwicklungen in Reihe geschalteten Kondensator (C1, C2)für eine phasenverschobene Stromversorgung aufweist.

31. Vorrichtung nach Anspruch 30,
**dadurch gekennzeichnet, dass** der bzw. die Kondensatoren (C1, C2) mittels eines Umschalters (K1) mit einer der beiden Statorwicklungen (27, 28) in Reihe schaltbar ist bzw. sind.

32. Vorrichtung nach Anspruch 28 oder 29,
**dadurch gekennzeichnet, dass** die Halbleiterschalter als MOSFETs oder IGBTs ausgebildet sind.

33. Vorrichtung nach einem der Ansprüche 12 und 27 bis 32,
**dadurch gekennzeichnet, dass** das Motorrad-Rad (4) mit einer eine Verlagerung des Radmittelpunktes vermeidenden Mitnehmerkraft drehfest mit der Hauptwelle (2) verbunden ist und die Stromversorgungsschaltung (26) derart eingestellt ist, dass bei dem vom Elektromotor (29) beim Hochlauf auf die Messdrehzahl und beim Abbremsen gelieferten Drehmoment die drehfeste Verbindung zwischen dem Motorrad-Rad (4) und der Hauptwelle (2) beibehalten ist.

34. Vorrichtung zum Messen der Unwucht eines Kraftfahrzeugrades mit
- einer drehbar gelagerten Hauptwelle (2) einer Radauswuchtmaschine, welche von einem elektrischen Antrieb (20) antreibbar ist,
- einem zwischen dem elektrischen Antrieb (20) und der Hauptwelle (2) vorgesehenen Getriebe (30), über welches das vom elektrischen Antrieb (20) erzeugte Drehmoment auf die Hauptwelle (2) übertragbar ist und
- einer Messeinrichtung (23), welche bei Messdrehzahl aus einer Unwucht des Kraftfahrzeugrades (4) resultierende Kräfte in einem Messlauf misst,
nach einem der Ansprüche 1 bis 33,
**dadurch gekennzeichnet, dass**
- das Getriebe (30) zwischen dem elektrischen Antrieb (20) und der Hauptwelle (2) als Zahnradgetriebe ausgebildet ist.

35. Vorrichtung nach Anspruch 34,
**dadurch gekennzeichnet, dass** das Zahnradgetriebe zwei Zahnräder (31, 32) aufweist.

36. Vorrichtung nach Anspruch 34 oder 35,
**dadurch gekennzeichnet, dass** die Zahnräder des Zahnradgetriebes eine Schrägverzahnung aufweisen.

37. Vorrichtung nach einem der Ansprüche 1 bis 36,
**dadurch gekennzeichnet, dass** der elektrische Antrieb (20) unterhalb der Ebene, in welcher die Hauptwelle (2) liegt, im Maschinengehäuse (1) angeordnet ist.

38. Vorrichtung nach einem der Ansprüche 1 bis 37,
**dadurch gekennzeichnet, dass** die Lagereinrichtung (33) zur drehbaren Lagerung der Hauptwelle (2), in welche die die Messwandler aufweisende Messeinrichtung (23) integriert ist, gemeinsam mit dem elektrischen Antrieb (20) am Maschinengehäuse (1) schwenkbar gelagert ist.

39. Verfahren zur Messung einer Unwucht eines Motorrad-Rades, bei dem das Motorrad-Rad mittels eines von einem elektrischen Antrieb erzeugten Drehmoments, welches von einer Hauptwelle auf das Motorrad-Rad über eine drehfeste Verbindung übertragen wird, auf Messdrehzahl gebracht wird, wobei bei der Messdrehzahl aus der Unwucht resultierende Kräfte gemessen werden und nach der Messung das Motorrad-Rad abgebremst wird,
**dadurch gekennzeichnet, dass** bei erreichter Messdrehzahl die drehfeste Verbindung zwischen dem Motorrad-Rad und der Hauptwelle durch eine von einem Drehmomentimpuls erzeugte Trägheitskraft gelöst wird.

40. Verfahren nach Anspruch 39,
**dadurch gekennzeichnet, dass** zum Abbremsen des Motorrad-Rades die gelöste drehfeste Verbindung zwischen der Hauptwelle und dem Motorrad-Rad durch eine von einem weiteren Drehmomentimpuls erzeugte Trägheitskraft wiederhergestellt wird.

41. Verfahren nach Anspruch 39 oder 40,
**dadurch gekennzeichnet, dass** vor der Wiederherstellung der drehfesten Verbindung zwischen dem Motorrad-Rad und der Hauptwelle die Hauptwelle auf etwa die Drehzahl des drehenden Motorrad-Rades angetrieben wird.

42. Verfahren nach einem der Ansprüche 39 bis 41,
**dadurch gekennzeichnet, dass** die Trägheitskraft durch eine von der Hauptwelle mitgedrehten trägen Masse, auf welche der vom elektrischen Antrieb erzeugte Drehmomentimpuls wirkt, gebildet wird.

## Claims

1. Apparatus for measuring an unbalance of a motor cycle wheel comprising
- a rotatably mounted main shaft (2) of a wheel balancing machine, which is drivable by an electric drive (20),
- a clamping shaft (36) which can be fixed in coaxial relationship with the main shaft (2) on the balancing machine and on which the motorcycle wheel (4) is mounted rotatably in its own bearings (21),
- an entrainment device (22) which is non-rotatably connected to the main shaft (2) for the transmission of a torque produced by the electric drive (20) from the main shaft (2) to the motorcycle wheel (4) rotatably mounted on the clamping shaft (36), and
- a measuring device (23) which in a measuring run measures forces resulting from an unbalance of the motorcycle wheel at a measuring rotary speed,
**characterised in that**
- the non-rotatable connection between the entrainment device (22) and the motorcycle wheel (4) is releasable by an inertia force which acts on the entrainment device (22) and which is formed by a torque pulse transmitted by way of the main shaft (2).

2. Apparatus according to claim 1 **characterised in that** the torque pulse is produced at the measuring rotary speed.

3. Apparatus according to claim 1 or claim 2 **characterised in that** after the measuring run the entrainment device (22) is actuated for non-rotatable connection to the motorcycle wheel (4) by an inertia force produced by a further torque pulse, for braking the motorcycle wheel.

4. Apparatus according to one of claims 1 to 3 **characterised in that** there is provided an inertia mass (14) which rotates with the main shaft (2) and which is mounted movably in particular on the entrainment device (22) and on which the torque pulse acts.

5. Apparatus according to claim 4 **characterised in that** the inertia mass (14) is mounted movably in one direction.

6. Apparatus according to claim 4 or claim 5 **characterised in that** the inertia mass (14) is mounted movably against a return force.

7. Apparatus according to one of claims 4 to 6 **characterised in that** the inertia mass (14) is mounted movably in one of the two directions of rotation of the main shaft (2).

8. Apparatus according to one of claims 4 to 7 **characterised in that** the inertia mass (14) is in the form of a pendulum.

9. Apparatus according to one of claims 1 to 8 **characterised in that** the torque pulse is produced by the electric drive (20).

10. Apparatus according to one of claims 1 to 9 **characterised in that** the entrainment device (22) engages the motorcycle wheel (4) with a given entrainment force for producing the non-rotatable connection between the main shaft (2) and the motorcycle wheel (4).

11. Apparatus according to claim 10 **characterised in that** transmission of the entrainment force is ensured by an entrainment spring (13).

12. Apparatus according to claim 10 or claim 11 **characterised in that** the torque produced by the electric drive (20) is adjustable in dependence on the entrainment force upon acceleration to the measuring rotary speed and/or upon braking.

13. Apparatus according to one of claims 1 to 12 **characterised in that** the entrainment device (22) has an entrainment stirrup (11) which can be pressed against the tyre tread surface of the motorcycle wheel (4) with the entrainment force.

14. Apparatus according to claim 13 **characterised in that** the entrainment stirrup (11) is pivotable about a pivot axis (12) extending substantially parallel to the main shaft (2).

15. Apparatus according to claim 13 or claim 14 **characterised in that** the entrainment stirrup (11) is pivotable into three positions, wherein a first position is assumed upon acceleration to the measuring rotary speed, a second position is assumed upon release of the non-rotatable connection between the entrainment device (22) and the motorcycle wheel (4), and a third position is assumed upon braking of the motorcycle wheel (4).

16. Apparatus according to claim 14 or claim 15 **characterised in that** the entrainment stirrup (11) is pivoted about the pivot axis (12) in one direction on the change between the three successive positions.

17. Apparatus according to one of claims 1 to 16 **characterised in that** the entrainment stirrup (11) is fixed at least in the first and in the second positions by a latching device (16 to 18) actuated by the inertia mass (14).

18. Apparatus according to claim 17 **characterised in that** the latching device (16 to 18) is formed by at least one latching element (16) which is actuated by the inertia mass (14) and latching abutments (17, 18) which are fixed to the entrainment stirrup and with which the at least one latching element (16) engages.

19. Apparatus according to one of claims 4 to 18 **characterised in that** the length of movement of the inertia mass (14) is limited.

20. Apparatus according to claim 19 **characterised in that** there is provided at least one abutment (24) for limiting the length of the movement of the inertia mass (14) on the entrainment device (22).

21. Apparatus according to one of claims 13 to 18 **characterised in that** the entrainment stirrup (11) is successively movable from the first position to the third position by spring force, in particular the entrainment spring (13).

22. Apparatus according to one of claims 1 to 21 **characterised in that** the entrainment device (22) and the clamping shaft (19) are non-rotatably connected together.

23. Apparatus according to one of claims 1 to 22 **characterised in that** the non-rotatable connection of the entrainment device (22) to the main shaft (2) is releasable.

24. Apparatus according to one of claims 1 to 23 **characterised in that** when the rotational connection between the entrainment device (22) and the motorcycle wheel (4) is released, the electric drive (20) of the main shaft (2) is switched off.

25. Apparatus according to one of claims 1 to 24 **characterised in that** a sensing device (9) for sensing the rotary movement of the motorcycle wheel (4) is arranged on the machine housing (1) of the balancing machine.

26. Apparatus according to claim 25 **characterised in that** the sensing device (9) senses a marking arranged on the motorcycle wheel (4).

27. Apparatus according to one of claims 1 to 16 **characterised in that** the power supply circuit (26) for supplying the electric drive (20) which is in the form of an ac motor, in particular a single-phase ac motor, has an ac voltage controller (S1, S2) controlled by pulse width modulation (25).

28. Apparatus according to claim 27 **characterised in that** the ac voltage controller (S1, S2) has a series switch (S1) and a commutation switch (S2) which are controlled by pulse width modulation.

29. Apparatus according to claim 27 **characterised in that** the series switch (S1) and the commutation switch (S2) are each formed by two respective semiconductor switches connected in opposite series relationship.

30. Apparatus according to one of claims 27 to 29 **characterised in that** the electric motor (29) which is in the form of a single-phase ac motor has two stator windings (27, 28) and at least one capacitor (C1, C2) connected in series with one of the two stator windings depending on the respective direction of rotation, for a phase-shifted power supply.

31. Apparatus according to claim 30 **characterised in that** the capacitor or capacitors (C1, C2) can be connected in series with one of the two stator windings (27, 28) by means of a change-over switch (K1).

32. Apparatus according to claim 28 or claim 29 **characterised in that** the semiconductor switches are in the form of MOSFETs or IGBTs.

33. Apparatus according to one of claims 12 and 27 to 32 **characterised in that** the motorcycle wheel (4) is non-rotatably connected to the main shaft (2) with an entrainment force which avoids displacement of the centre point of the wheel and the power supply circuit (26) is so set that the non-rotatable connection between the motorcycle wheel (4) and the main shaft (2) is maintained at the torque delivered by the electric motor (29) upon acceleration to the measuring rotary speed and upon braking.

34. Apparatus for measuring the unbalance of a motor cycle wheel comprising
- a rotatably mounted main shaft (2) of a wheel balancing machine, which is drivable by an electric drive (20),
- a transmission (30) which is provided between the electric drive (20) and the main shaft (2) and by way of which the torque produced by the electric drive (20) can be transmitted to the main shaft (2), and
- a measuring device (23) which in a measuring run measures forces resulting from an unbalance of the motor vehicle wheel (4) at a measuring rotary speed,
according to one of claims 1 to 33,
**characterised in that**
- the transmission (30) between the electric drive (20) and the main shaft (2) is in the form of a gear transmission.

35. Apparatus according to claim 34 **characterised in that** the gear transmission has two gears (31, 32).

36. Apparatus according to claim 34 or claim 35 **characterised in that** the gears of the gear transmission have a helical tooth arrangement.

37. Apparatus according to one of claims 1 to 36 **characterised in that** the electric drive (20) is arranged in the machine housing (1) below the plane in which the main shaft (2) is disposed.

38. Apparatus according to one of claims 1 to 37 **characterised in that** the mounting device (33) for rotatably mounting the main shaft (2), in which the measuring device (23) having the measuring transducers is integrated, is mounted pivotably on the machine housing (1) jointly with the electric drive (20).

39. A method of measuring an unbalance of a motorcycle wheel, in which the motorcycle wheel is raised to the measuring rotary speed by means of a torque which is produced by an electric drive and which is transmitted from a main shaft to the motorcycle wheel by way of a non-rotatable connection, wherein forces resulting from the unbalance at the measuring rotary speed are measured and the motorcycle wheel is braked after the measuring operation,
**characterised in that** when the measuring rotary speed is reached the non-rotatable connection between the motorcycle wheel and the main shaft is released by an inertia force produced by a torque pulse.

40. A method according to claim 39 **characterised in that** to brake the motorcycle wheel the released non-rotatable connection between the main shaft and the motorcycle wheel is restored by an inertia force produced by a further torque pulse.

41. A method according to claim 39 or claim 40 **characterised in that** prior to restoration of the non-rotatable connection between the motorcycle wheel and the main shaft the main shaft is driven to approximately the rotary speed of the rotating motorcycle wheel.

42. A method according to one of claims 39 to 41 **characterised in that** the inertia force is formed by an inertia mass which is entrained by the main shaft and on which the torque pulse produced by the electric drive acts.

## Revendications

1. Dispositif de mesure du balourd d'une roue de motocyclette comprenant
- un arbre (2) principal monté tournant d'une machine d'équilibrage de roue, qui peut être entraîné par un entraînement (20) électrique ;
- un arbre (36) de blocage, qui peut être fixé coaxialement à l'arbre (2) principal sur la machine d'équilibrage et sur lequel la roue (4) de la motocyclette peut être montée tournante dans ses propres paliers (21) ;
- un dispositif (22) entraîneur par lequel, pour la transmission d'un couple de rotation produit par l'entraînement (20) électrique de l'arbre (2) principal à la roue (4) de motocyclette montée tournante sur l'arbre (36) de blocage, la roue (4) est solidaire en rotation de l'arbre (2) principal ; et
- un dispositif (23) de mesure, qui mesure dans une course de mesure des forces provenant, pour une vitesse de rotation de mesure d'un balourd, de la roue de la motocyclette,
**caractérisé en ce que**
- il peut être mis fin à la solidarisation en rotation entre le dispositif (22) entraîneur et la roue (4) de la motocyclette par une force d'inertie qui agit sur le dispositif (22) entraîneur et qui est formée par une impulsion de couple de rotation transmise par l'arbre (2) principal.

2. Dispositif suivant la revendication 1, **caractérisé en ce que** l'impulsion de couple de rotation est produite à la vitesse de rotation de mesure.

3. Dispositif suivant la revendication 1 ou 2, **caractérisé en ce qu'**après la course de mesure, le dispositif (22) entraîneur est, pour freiner la roue de la motocyclette, actionné pour la solidarisation en rotation avec la roue (4) de la motocyclette par une force d'inertie produite par une autre impulsion de couple de rotation.

4. Dispositif suivant l'une des revendications 1 à 3, **caractérisé en ce qu'**il est prévu une masselotte (14) d'inertie entraînée avec l'arbre (2) principal monté mobile notamment sur le dispositif (22) entraîneur et sur laquelle agit l'impulsion de couple de rotation.

5. Dispositif suivant la revendication 4, **caractérisé en ce que** la masselotte (14) d'inertie est montée mobile dans un sens.

6. Dispositif suivant la revendication 4 ou 5, **caractérisé en ce que** la masselotte (14) d'inertie est montée mobile à l'encontre d'une force de rappel.

7. Dispositif suivant l'une des revendications 4 à 6, **caractérisé en ce que** la masselotte (14) d'inertie est montée mobile dans l'un des deux sens de rotation de l'arbre (2) principal.

8. Dispositif suivant l'une des revendications 4 à 7, **caractérisé en ce que** la masselotte (14) d'inertie est constituée en pendule.

9. Dispositif suivant l'une des revendications 1 à 8, **caractérisé en ce que** l'impulsion de couple de rotation est produite par un entraînement (20) électrique.

10. Dispositif suivant l'une des revendications 1 à 9, **caractérisé en ce que**, pour obtenir la solidarisation en rotation entre l'arbre (2) principal et la roue (4) de la motocyclette, le dispositif (22) entraîneur attaque la roue (4) de la motocyclette avec une force d'entraîneur déterminée.

11. Dispositif suivant la revendication 10, **caractérisé en ce que** la transmission de la force de l'entraîneur est assurée par un ressort (13) d'entraîneur.

12. Dispositif suivant la revendication 10 ou 11, **caractérisé en ce que** le couple de rotation produit par l'entraînement (20) électrique peut être réglé en fonction de la force de l'entraîneur lors de l'augmentation de la rotation jusqu'à la vitesse de rotation de mesure et/ou lors du freinage.

13. Dispositif suivant l'une des revendications 1 à 12, **caractérisé en ce que** le dispositif (22) entraîneur a un étrier (11) d'entraîneur pouvant être appliqué par la force de l'entraîneur sur la surface de roulement de la roue (4) de la motocyclette.

14. Dispositif suivant la revendication 13, **caractérisé en ce que** l'étrier (11) d'entraîneur est monté basculant par rapport à un axe (12) de basculement s'étendant sensiblement parallèlement à l'arbre (2) principal.

15. Dispositif suivant la revendication 13 ou 14, **caractérisé en ce que** l'étrier (11) d'entraîneur peut basculer dans trois positions, une première position étant prise lorsque la vitesse de rotation augmente jusqu'à la vitesse de rotation de mesure, une deuxième position lorsqu'il est mis fin à la solidarisation en rotation entre le dispositif (22) entraîneur et la roue (4) de la motocyclette et une troisième position lors du freinage de la roue (4) de la motocyclette.

16. Dispositif suivant la revendication 14 ou 15, **caractérisé en ce que**, lors du passage entre les trois positions successives, l'étrier (11) d'entraîneur est basculé dans un sens par rapport à l'axe (12) de basculement.

17. Disposition suivant l'une des revendications 1 à 16, **caractérisé en ce que** l'étrier (11) d'entraîneur est immobilisé au moins dans la première et dans la deuxième position par un dispositif (16 à 18) d'encliquetage actionné par la masselotte (14) d'inertie.

18. Dispositif suivant la revendication 17, **caractérisé en ce que** le dispositif (16 à 18) d'encliquetage est formé d'au moins un élément (16) d'encliquetage actionné par la masselotte (14) d'inertie et par des butées (17, 18) d'encliquetage qui sont fixées à l'étrier de l'entraîneur et avec lesquelles le au moins un élément (16) d'encliquetage vient en prise.

19. Dispositif suivant l'une des revendications 4 à 18, **caractérisé en ce que** l'étendue de déplacement de la masselotte (14) inerte est limitée.

20. Dispositif suivant la revendication 19, **caractérisé en ce que**, pour limiter l'étendue de déplacement de la masselotte (14) inerte, il est prévu au moins une butée (24) sur le dispositif (22) entraîneur.

21. Dispositif suivant l'une des revendications 13 à 18, **caractérisé en ce que** l'étrier (11) de l'entraîneur peut être déplacé par une force élastique, notamment par le ressort (13) de l'entraîneur, successivement de la première position jusqu'à la troisième position.

22. Dispositif suivant l'une des revendications 1 à 21, **caractérisé en ce que** le dispositif (22) entraîneur et l'arbre (19) de blocage sont solidaires en rotation.

23. Dispositif suivant l'une des revendications 1 à 22, **caractérisé en ce qu'**il peut être mis fin à la solidarisation en rotation du dispositif (22) entraîneur et de l'arbre (2) principal.

24. Dispositif suivant l'une des revendications 1 à 23, **caractérisé en ce que**, lorsqu'il est mis fin à la solidarisation en rotation entre le dispositif (22) entraîneur et la roue (4) de la motocyclette, l'entraînement (20) électrique de l'arbre (2) principal est déconnecté.

25. Dispositif suivant l'une des revendications 1 à 24, **caractérisé en ce que**, sur la bâti (1) de la machine d'équilibrage, est monté un dispositif (9) de détection détectant le mouvement de rotation de la roue (4) de la motocyclette.

26. Dispositif suivant la revendication 25, **caractérisé en ce que** le dispositif (9) de détection détecte un repère disposé sur la roue (4) de la motocyclette.

27. Dispositif suivant l'une des revendications 1 à 26, **caractérisé en ce que** le circuit (26) d'alimentation en courant de l'entraînement (20) électrique constitué sous la forme d'un moteur à courant alternatif, notamment d'un moteur à courant alternatif monophasé, comporte un régulateur (S1, S2) de la tension alternative commandé par modulation (25) en largeur d'impulsion.

28. Dispositif suivant la revendication 27, **caractérisé en ce que** le régulateur (S1, S2) de la tension alternative a un commutateur (S1) continu et un commutation (S2) de commutation qui sont commandés par la modulation en largeur d'impulsion.

29. Dispositif suivant la revendication 27, **caractérisé en ce que** le commutateur (S1) continu et le commutateur (S2) de commutation sont formés, respectivement, de deux commutateurs à semi-conducteurs montés tête-bêche.

30. Dispositif suivant l'une des revendications 27 à 29, **caractérisé en ce que** le moteur (29) électrique constitué en moteur à courant alternatif monophasé a, pour une alimentation en courant déphasé, deux enroulements (27, 28) statoriques et au moins un condensateur (C1, C2) monté en série suivant le sens de rotation avec l'un des deux enroulements statoriques.

31. Dispositif suivant la revendication 30, **caractérisé en ce que** le ou les condensateurs (C1, C2) peut ou peuvent être montés en série avec l'un des deux enroulements (27, 28) statoriques au moyen d'un inverseur (K1).

32. Dispositif suivant la revendication 28 ou 29, **caractérisé en ce que** les commutateurs à semi-conducteurs sont constitués sous la forme de MOSFET ou d'IGBT.

33. Dispositif suivant l'une des revendications 12 et 27 à 32, **caractérisé en ce que** la roue (4) de la motocyclette est solidarisée en rotation à l'arbre (2) principal par une force d'entraîneur empêchant un décalage du centre de la roue et le circuit (26) d'alimentation en courant est réglé de façon à conserver, lors du couple de rotation fourni par le moteur (29) électrique, lors de l'augmentation à la vitesse de rotation de mesure et lors du freinage, la solidarisation en rotation entre la roue (4) de la motocyclette et l'arbre (2) principal.

34. Dispositif de mesure balourd d'une roue de véhicule automobile comprenant
- un arbre (2) principal monté tournant d'une machine d'équilibrage de roue qui peut être entraîné par un entraînement (20) électrique ;
- une transmission (30) qui est prévue entre l'entraînement (20) électrique et l'arbre (2) principal et par laquelle le couple de rotation produit par l'entraînement (20) électrique peut être transmis à l'arbre (2) principal ; et
- un dispositif (23) de mesure qui mesure dans une course de mesure les forces provenant à la vitesse de rotation de mesure d'un balourd de la roue (4) du véhicule automobile suivant l'une des revendications 1 à 33,
**caractérisé en ce que**
- la transmission (30) entre l'entraînement (20) électrique et l'arbre (2) principal est constituée sous la forme d'un engrenage.

35. Dispositif suivant la revendication 34, **caractérisé en ce que** l'engrenage a deux roues (31, 32) dentées.

36. Dispositif suivant la revendication 34 ou 35, **caractérisé en ce que** les roues dentées de l'engrenage ont une denture hélicoïdale.

37. Dispositif suivant l'une des revendications 1 à 36, **caractérisé en ce que** l'entraînement (20) électrique est disposé dans le bâti (1) de la machine sous le plan dans lequel se trouve l'arbre (2) principal.

38. Dispositif suivant l'une des revendications 1 à 37, **caractérisé en ce que** le dispositif (33) formant palier pour monter à rotation l'arbre (2) principal, dans lequel le dispositif (23) de mesure ayant le transducteur de mesure est intégré, est monté basculant ensemble avec l'entraînement (20) électrique sur le bâti (1) de la machine.

39. Procédé de mesure d'un balourd d'une roue de motocyclette, dans lequel on porte la roue de la motocyclette au moyen d'un couple de rotation qui est produit par un entraînement électrique et qui est transmis d'un arbre principal à la roue de la motocyclette par une solidarisation en rotation à une vitesse de rotation de mesure, on mesure les forces provenant du balourd à la vitesse de rotation d'une mesure et, après la mesure, on freine la roue de la motocyclette,
**caractérisé en ce que**, lorsque la vitesse de rotation de mesure est atteinte, on met fin à la solidarisation en rotation entre la roue de la motocyclette et l'arbre principale par une force d'inertie produite par une impulsion de couple de rotation.

40. Procédé suivant la revendication 39, **caractérisé en ce que**, pour freiner la roue de la motocyclette, on rétablit la solidarisation en rotation à laquelle il avait été mis fin entre l'arbre principal et la roue de la motocyclette par une force d'inertie produite par une autre impulsion de couple de rotation.

41. Procédé suivant la revendication 39 ou 40, **caractérisé en ce qu'**avant de rétablir la solidarisation en rotation entre la roue de la motocyclette et l'arbre principal, on entraîne l'arbre principal à peu près à la vitesse de rotation de la roue qui tourne de la motocyclette.

42. Procédé suivant l'une des revendications 39 à 41, **caractérisé en ce que** l'on forme la force d'inertie par une masselotte d'inertie qui est entraînée par l'arbre principal et sur laquelle agit l'impulsion de couple de rotation produite par l'entraînement électrique.
